# FASCICULE DE BREVET EUROPEEN

(11) **EP 4 028 365 B1**
(45) Date de publication et mention de la délivrance du brevet: **11.11.2026**
(21) Numéro de dépôt: 20761862.0
(22) Date de dépôt: 02.09.2020
(51) Int. Cl.: C02F 1/44, B01D 61/00, B01D 61/02, B01D 61/04, B01D 61/06, B01D 61/58, C02F 103/08, F03G 7/00

(54) **PROCEDE DE DESSALEMENT AVEC UNE ETAPE D'OSMOSE RETARDEE ET UNE ETAPE D'OSMOSE INVERSE**
ENTSALZUNGSVERFAHREN MIT EINER VERZÖGERTEN-OSMOSIS-STUFE UND EINER UMKEHROSMOSESTUFE
DESALINATION PROCESS WITH A STEP OF RETARDED OSMOSIS AND A STEP OF REVERSE OSMOSIS

(30) Priorité: 13.09.2019 FR 1910137
(43) Date de publication de la demande: 20.07.2022
(73) Titulaire: IFP Energies nouvelles, 92852 Rueil-Malmaison (FR)
(72) Inventeur: FOURNO, Andre, 92852 RUEIL-MALMAISON CEDEX (FR)
(74) Mandataire: IFP Energies nouvelles
(86) Numéro de dépôt international: PCT/EP2020/074395
(87) Numéro de publication internationale: WO 2021/047965

(56) Documents cités:
- DE-A1- 102010 014 464
- KR-A- 20140 128 496
- KR-A- 20160 137 483
- US-A1- 2017 066 670

## Description

### Domaine technique

La présente invention se rapporte au domaine de dessalement d'eau salée grâce par des phénomènes d'osmose. Elle concerne notamment un procédé de dessalement permettant de rendre une eau, initialement salée, en eau potable.

Il existe de nombreux endroits dans le monde où les populations locales manquent d'eau potable, que ce soit pour leurs besoins propres ou pour l'irrigation. De ce fait, le besoin en eau potable est un enjeu majeur pour un certain nombre de territoires, et notamment pour certaines îles.

De plus, l'accroissement démographique des populations d'une part, et le réchauffement climatique d'autre part, tendent à rendre plus rares les ressources en eau potable. Les gouvernements et administrations locales cherchent donc des solutions afin de répondre aux besoins actuels et futurs en eau potable.

Par ailleurs, certains de ces territoires, notamment les îles, disposent d'importantes ressources en eau salée, par exemple la mer, les océans ou encore des sources souterraines salées. Ainsi, le dessalement, qui est un processus permettant de rendre une eau initialement salée en eau potable, intéresse de nombreux territoires à travers le monde afin de répondre aux besoins des populations.

### Technique antérieure

Les techniques de dessalement actuelles sont principalement réparties en trois grandes familles :
- les techniques de distillation ;
- les techniques basées sur l'électrodialyse ;
- les techniques basées sur l'osmose.

Les techniques de dessalement par distillation consistent à chauffer l'eau salée jusqu'à son évaporation. La vapeur d'eau ainsi obtenue est ensuite refroidie et l'eau, sous forme liquide, est alors obtenue par condensation. Cette technique est très développée à travers le monde mais elle présente l'inconvénient de consommer une quantité importante d'énergie. De ce fait, le coût de l'eau produite, dépendant directement du coût de l'énergie consommée, est élevé.

La deuxième grande famille de dessalement est basée sur l'électrodialyse.

L'électrodialyse consiste à permettre le passage d'ions à travers de membranes, sous l'effet d'un champ électrique, créé par deux électrodes. Le sel contenu dans l'eau salée est composé d'ions Na⁺ et Cl⁻. Sous l'effet du champ électrique, les ions Na⁺ sont attirés vers l'une des électrodes et les ions Cl⁻ sont attirés vers l'autre électrode. Sous électrodialyse, l'eau salée est donc progressivement déchargée des ions Na⁺ et Cl⁻, et donc du sel qu'elle contient. Cette technique est adaptée aux eaux de faible salinité et pour des petites quantités, par exemple en laboratoire. Cette technique de dessalement par électrodialyse s'avère donc peu adaptée à la production importante d'eau fortement ou sensiblement salée.

La troisième grande famille de dessalement utilise les principes d'osmose.

L'osmose est un phénomène pour lequel, lorsque deux fluides de concentrations en soluté différentes (par exemple deux salinités différentes) sont séparés par une membrane semi-perméables, le solvant du fluide le moins concentré va traverser la membrane jusqu'à ce qu'une surpression stoppe le flux du solvant ou qu'un équilibre en concentration des solutés des deux fluides soit trouvé (par exemple, les fluides ont la même salinité). On parle alors de pression osmotique. Par membrane semi-perméable, on entend une membrane permettant le passage du solvant du fluide (par exemple de l'eau) et empêchant le passage des différents solutés, par exemple le sel. Ainsi, la membrane dite « semi-perméable » est perméable au solvant (par exemple l'eau) et imperméable aux solutés (par exemple le sel). Lors du transfert du solvant à travers la membrane semi-perméable, une différence de pression s'opère entre les deux fluides : la pression va augmenter du côté du fluide initialement le plus concentré. La pression osmotique dépend de la différence de concentration en soluté des deux fluides. Ainsi, plus la différence de concentration en soluté des deux fluides est élevée, plus la pression osmotique est élevée. Par exemple, pour deux eaux de salinités différentes, plus la différence de salinité des deux eaux est élevée, plus la pression osmotique générée par ces deux eaux est élevée.

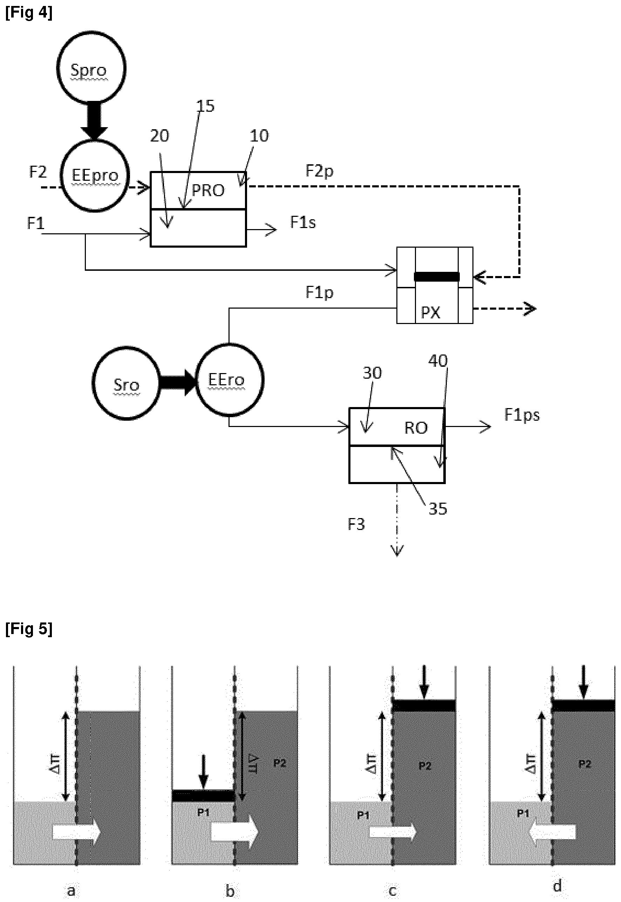

La figure [Fig 5] présente différents procédés a), b) c) et d) basés sur le principe de l'osmose. Sur les quatre procédés a), b), c) et d) présentés, la colonne de gauche en gris clair représente le fluide initialement le moins concentré et la colonne de droite, le fluide initialement le plus concentré (c'est-à-dire le fluide le plus salé dans le cas de tels fluides), représenté en gris foncé (par comparaison au gris clair de la colonne de gauche).

La figure de gauche a) présente le premier procédé, celui de l'osmose directe dite « Forward Osmosis », par la suite FO. Sur cette figure a), la flèche blanche représente le passage du solvant contenu dans la colonne de gauche, du fluide initialement le moins concentré, à travers la membrane semi-perméable représentée en traits pointillés, vers la colonne de droite, du fluide initialement le plus concentré. La membrane est imperméable aux solutés qui restent donc dans la colonne dans laquelle ils sont initialement présents. Ainsi, le fluide de la colonne de gauche verra sa concentration en soluté augmenter alors que le fluide de la colonne de droite verra sa concentration en soluté diminuer. En parallèle la pression de la colonne de droite va augmenter jusqu'à annuler le flux de solvant à travers la membrane et se matérialise sur le schéma a) par une différence de hauteurs des colonnes de part et d'autre de la membrane semi-perméable (les deux colonnes étant initialement à la même hauteur). Cette différence de pression ΔΠ correspond à la pression dite osmotique. Ce procédé tend à filtrer le fluide de la colonne de gauche tout en diluant le fluide de la colonne de droite. Il permet également de générer une pression.

La figure b) présente un deuxième procédé, celui de l'osmose renforcée par la pression ou « Pressure Enhanced Osmosis », par la suite PEO. Ce procédé diffère de celui de la figure a) par l'ajout d'une pression P1 appliquée sur le fluide de la colonne de gauche (celui initialement le moins concentré). La flèche noire matérialise l'application de la pression P1. La pression P1 est, pour ce procédé PEO, supérieure à la pression P2 de la colonne de droite. Ainsi, le passage du solvant à travers la membrane semi-perméable est facilité par l'ajout de cette pression P1 et le volume filtré du fluide de la colonne de gauche est ainsi plus important.

La figure c) présente un troisième procédé, celui de l'osmose retardée ou « Pressure Retarded Osmosis », par la suite PRO. Dans ce procédé, on applique une contre-pression P2 matérialisée par la flèche noire, sur la colonne de droite correspondant au fluide initialement le plus concentré. La pression P2 est telle que la différence entre la pression P2 et la pression P1 existant dans la colonne de gauche (contenant le fluide initialement le moins concentré) soit inférieure à la pression osmotique ΔΠ, de manière à permettre le passage du solvant à travers la membrane de la colonne de gauche à la colonne de droite. Ce procédé est notamment utile pour générer/maintenir une pression hydrostatique dans la colonne de gauche. Pour cela le volume de fluide ayant transité à travers la membrane est exploité à travers une turbine tandis que le volume initial qui a été dilué servira à maintenir la pression du fluide le plus concentré.

Enfin, la figure d) présente un quatrième procédé, celui de l'osmose inverse ou « Reverse Osmosis », par la suite RO. Dans ce procédé, on applique une contre-pression P2 matérialisée par la flèche noire, sur la colonne de droite correspondant au fluide initialement le plus concentré. Cependant, contrairement au procédé c), la pression P2 est telle que la différence entre la pression P2 et la pression P1 existant dans la colonne de gauche soit supérieure à la pression osmotique ΔΠ, de manière à permettre le passage du solvant à travers la membrane de la colonne de droite à la colonne de gauche, c'est-à-dire en sens inverse du passage des procédés a) à c). De ce fait, la pression P2 est telle qu'on ne va pas générer un équilibre de concentration des solutés des deux fluides, mais au contraire, le solvant du fluide de la colonne de droite, initialement le plus concentré, va passer à travers la membrane pour rejoindre le fluide de la colonne de gauche, initialement le moins concentré. Ainsi, le fluide de la colonne de droite va voir sa concentration en soluté augmenter et le fluide de la colonne de gauche va se diluer encore davantage, réduisant encore sa concentration en soluté. Ainsi, le procédé RO tend à augmenter la différence de concentration en solutés des deux fluides. Cela est donc particulièrement intéressant pour le dessalement. En effet, à partir de deux fluides de salinités différentes, le procédé RO permet d'obtenir un dessalement d'un de ces deux fluides (celui ayant la plus faible salinité) et ainsi obtenir une eau potable.

Ce procédé consomme beaucoup moins d'énergie que les techniques par distillation ou électrodialyse. Cependant, alors qu'on dilue le premier fluide qui a la salinité initialement la plus faible, on va augmenter la concentration de celui qui est initialement le plus salé. Par exemple, lorsque le fluide le plus salé est de l'eau de mer, on va produire une eau potable, objet du procédé de dessalement, mais également une eau dont la concentration en sel est supérieure à celle de l'eau de mer. Généralement, cette eau est remise dans le milieu ambiant, en l'espèce dans la mer ou l'océan. La très forte concentration en sel n'est pas sans impact sur l'environnement marin, notamment sur la faune et la flore locales.

On connait notamment les procédés de dessalement des demandes de brevet DE 10 2010 014464 A1, US 2017/066670 A1, KR 2016 0137483 A et KR 2014 0128496 A.

La présente invention consiste à dessaler une eau salée, en rejetant une eau de concentration inférieure ou égale à celle du milieu ambiant, de préférence, proche de celle du milieu ambiant, tout en produisant une eau potable et en consommant une faible quantité d'énergie. Elle répond ainsi aux inconvénients des techniques de l'art antérieur.

Pour se faire, la présente invention concerne un procédé de dessalement d'un premier fluide au moyen d'un deuxième fluide pour produire un troisième fluide, le premier fluide ayant une salinité inférieure à celle du deuxième fluide, le procédé comprenant une étape d'osmose retardée et une étape d'osmose inverse. En outre, le procédé comprend les étapes suivantes :
* on fait entrer le premier fluide et le deuxième fluide dans une unité d'osmose retardée, le deuxième fluide entrant dans l'unité d'osmose retardée à une pression supérieure à la pression à laquelle le premier fluide entre dans l'unité d'osmose retardée ;
* on pressurise le premier fluide de l'unité d'osmose inverse au moyen d'un échange de pression avec le deuxième fluide sous pression sortant de l'unité d'osmose retardée, la pression de sortie du deuxième fluide de l'unité d'osmose retardée étant supérieure à la pression d'entrée du premier fluide ;
* on fait entrer le premier fluide pressurisé dans une unité d'osmose inverse pour récupérer un troisième fluide, la salinité du troisième fluide étant inférieure à la salinité du premier fluide.

On appelle salinité par la suite, la concentration en sel de type NaCl, et non la concentration des autres sels minéraux qui pourraient être contenus dans les fluides.

De préférence, tous les fluides peuvent être des eaux et de préférence le troisième fluide peut être une eau potable.

Il est décrit également un système de dessalement d'un premier fluide au moyen d'un deuxième fluide pour produire un troisième fluide, ledit premier fluide ayant une salinité inférieure audit deuxième fluide, le système comprenant une unité d'osmose retardée et une unité d'osmose inverse, l'unité d'osmose retardée comprenant une entrée du premier fluide, une entrée du deuxième fluide, une sortie du deuxième fluide pressurisé et une sortie dudit premier fluide, l'unité d'osmose inverse comprenant une entrée d'un premier fluide, une sortie d'un troisième fluide et une sortie du premier fluide. Par ailleurs, le système comprend un premier moyen d'échange de pression et le système est adapté pour la mise en œuvre du procédé de dessalement selon l'une des caractéristiques précédentes.

### Résumé de l'invention

L'invention concerne un procédé de dessalement d'un premier fluide au moyen d'un deuxième fluide, ledit premier fluide ayant une salinité inférieure à la salinité dudit deuxième fluide, lesdits premier et deuxième fluides étant de préférence des eaux, le procédé comprenant une étape d'osmose retardée et une étape d'osmose inverse. De plus, le procédé comprend les étapes suivantes :
* on fait entrer au moins une première portion dudit premier fluide et ledit deuxième fluide dans une unité d'osmose retardée, ledit deuxième fluide entrant dans ladite unité d'osmose retardée à une pression supérieure à la pression à laquelle ledit premier fluide entre dans ladite unité d'osmose retardée ;
* on pressurise au moins une deuxième portion dudit premier fluide au moyen d'un échange avec le deuxième fluide sous pression sortant de ladite unité d'osmose retardée ;
* on fait entrer ladite deuxième portion dudit premier fluide pressurisé dans une unité d'osmose inverse pour récupérer un troisième fluide, la salinité dudit troisième fluide étant inférieure à la salinité dudit premier fluide, caractérisé en ce que ledit deuxième fluide est de l'eau de mer et ledit premier fluide est de l'eau dont la salinité est comprise entre 2 et 18g/L, de préférence entre 2 et 7g/L.

Avantageusement, ladite unité d'osmose retardée comprend un premier réservoir et un deuxième réservoir, lesdits premier et deuxième réservoirs étant séparés par au moins une première paroi semi-perméable. L'étape d'osmose retardée comprend les étapes suivantes :
- on fait entrer au moins première portion dudit premier fluide dans ledit premier réservoir ;
- on pressurise le deuxième fluide en entrée dudit deuxième réservoir, la pression appliquée étant inférieure à la pression osmotique générée par la différence de salinité entre ledit premier fluide et ledit deuxième fluide, de manière à ce qu'un solvant du premier fluide traverse ladite première paroi semi-perméable et se mélange audit deuxième fluide ;
- on fait entrer ledit deuxième fluide pressurisé dans ledit deuxième réservoir ;
- on fait circuler ladite première portion dudit premier fluide dans ledit premier réservoir depuis une entrée vers une sortie dudit premier fluide et on fait circuler ledit deuxième fluide dans ledit deuxième réservoir depuis une entrée vers une sortie dudit deuxième fluide. fluide, ledit deuxième fluide est de l'eau de mer et ledit premier fluide est de l'eau dont la salinité est comprise entre 2 et 18g/L, de préférence entre 2 et 7g/L.

De manière avantageuse, ladite unité d'osmose inverse comprend un quatrième réservoir et ur troisième réservoir, et pour lequel l'étape d'osmose inverse comprend les étapes suivantes :
- on fait entrer ladite deuxième portion dudit premier fluide dans ledit quatrième réservoir, ;
- on applique une pression sur ladite deuxième portion dudit premier fluide afin qu'un solvant dudit premier fluide traverse une deuxième paroi semi-perméable pour entrer dans ledit troisième réservoir, ledit solvant dudit premier fluide formant ainsi un troisième fluide dans ledit troisième réservoir ; et
- on fait ressortir le troisième fluide par une sortie de l'unité d'osmose inverse.

Préférentiellement, on capte ledit premier fluide au niveau d'une sortie sous-marine d'une source souterraine ou d'un aquifère côtier.

Selon une variante de l'invention, on prétraite au moins l'un desdits premier et deuxième fluides avant leur utilisation, de préférence, on prétraite lesdits premier et deuxièmes fluides préalablement à l'étape d'osmose retardée.

Selon un mode de réalisation avantageux du procédé selon l'invention, on pressurise ledit deuxième fluide arrivant dans l'unité d'osmose retardée par échange de pression avec ledit deuxième fluide pressurisé sortant de l'unité d'osmose retardée.

De manière avantageuse, on pressurise ledit premier fluide arrivant dans l'unité d'osmose inverse par échange de pression avec ledit premier fluide sortant de l'unité d'osmose inverse pour augmenter la pression dudit premier fluide en entrée de l'unité d'osmose inverse.

Préférentiellement, la salinité dudit troisième fluide en sortie de l'unité d'osmose inverse est inférieure à 6 g/L, de préférence inférieure à 500 mg/L, de manière encore préférée, proche de 200 mg/L.

Selon une variante de l'invention, on utilise une source d'énergie supplémentaire, de préférence éolien, hydrolien, houlomoteur, solaire pour pressuriser la deuxième portion dudit premier fluide en amont de l'unité d'osmose inverse ou ledit deuxième fluide en amont de l'unité d'osmose retardée.

Il est décrit également un système de dessalement d'un premier fluide au moyen d'un deuxième fluide, ledit premier fluide ayant une salinité inférieure audit deuxième fluide, le système comprenant une unité d'osmose retardée et une unité d'osmose inverse, l'unité d'osmose retardée comprenant une entrée du premier fluide, une entrée du deuxième fluide, une sortie dudit deuxième fluide pressurisé et une sortie dudit premier fluide, l'unité d'osmose inverse comprenant une entrée dudit premier fluide, une sortie d'un troisième fluide et une sortie dudit premier fluide, caractérisé en ce que le système comprend un premier moyen d'échange de pression. De plus, le système est adapté pour la mise en œuvre du procédé de dessalement décrit précédemment.

### Liste des figures

D'autres caractéristiques et avantages du procédé et du système selon l'invention, apparaîtront à la lecture de la description ci-après d'exemples non limitatifs de réalisations, en se référant aux figures annexées et décrites ci-après.
La figure 1 représente un premier mode de réalisation du procédé et du système selon l'invention.
La figure 2 représente un deuxième mode de réalisation du procédé et du système selon l'invention.
La figure 3 représente un troisième mode de réalisation du procédé et du système selon l'invention.
La figure 4 représente un quatrième mode de réalisation du procédé et du système selon l'invention.
La figure 5, déjà décrite, représente différents procédés basés sur le principe de l'osmose, ces procédés étant connus de l'art antérieur.
La figure 6 représente un échangeur de pression adapté aux procédés et systèmes selon l'invention.

### Description des modes de réalisation

Classiquement, les procédés de dessalement consistent le plus souvent à dessaler de l'eau de mer dont la salinité est de l'ordre de 35 g/L, le plus souvent entre 30 et 40 g/L.

Or, il existe dans les mers et océans des zones où la salinité locale est inférieure à cette salinité d'eau de mer. Généralement, ces zones correspondent à l'arrivée de sources ou aquifères souterrains.

L'eau contenue dans ces sources peut être de l'eau douce ou de l'eau faiblement salée, c'est-à-dire moins salée que l'eau de mer. Ces sources peuvent par exemple correspondre à des sources dites karstiques, c'est-à-dire circulant dans un réseau de karsts.

Le karst est une formation géologique établie dans les roches carbonatées, calcaires et dolomies. Les karst contiennent de l'eau qui provient essentiellement de l'eau de pluie qui pénètre dans la roche jusqu'à atteindre l'aquifère karstique.

Par aquifère, on entend une formation dans laquelle l'eau souterraine s'accumule, circule et émerge, l'aquifère karstique étant un aquifère situé dans un karst. L'aquifère constitue ainsi un réservoir d'eau souterrain.

Comme l'eau contenue dans les karsts est essentiellement de l'eau de pluie, l'aquifère karstique est essentiellement de l'eau douce, dont la salinité est très faible (inférieure à 1g/L), proche de la salinité de l'eau potable.

La différence entre l'eau douce et l'eau potable consiste en une filtration des impuretés impropres à la consommation humaine, les impuretés pouvant être bactéries et autres microorganismes contenues dans l'eau, des concentrations en métaux et/ou sels minéraux incompatibles à la consommation. La salinité de l'eau douce, comme la salinité de l'eau potable est de préférence inférieure à 1 g/L, et de manière préférée inférieure à 500 mg/L afin de respecter les recommandations de l'OMS (Organisation Mondiale de la Santé).

Certaines de ces sources souterraines débouchent dans une mer ou un océan, donc dans de l'eau de mer. A l'embouchure de la source d'eau faiblement salée ou d'eau douce avec la mer ou l'océan, la salinité de l'eau locale est comprise entre la salinité de l'eau de la source et celle de l'eau de mer. En d'autres termes, la salinité de l'eau locale est inférieure à celle de l'eau de mer et supérieure à celle de l'eau douce.

En captant cette eau locale située à l'embouchure de la source avec l'océan ou la mer, on peut donc obtenir une eau de salinité inférieure à celle de l'eau de mer. La récupération de cette eau est intéressante car le dessalement à réaliser pour obtenir de l'eau potable est moins important que pour l'eau de mer et donc il est plus simple et moins coûteux, notamment par la plus faible pression osmotique en résultant, la différence de salinité entre l'eau potable et l'eau de source à l'embouchure étant de préférence inférieure à la différence de salinité entre l'eau potable et l'eau de mer.

Des moyens de captage ont été développés pour tenter de récupérer l'eau douce issue de ces sources, notamment par les demandes de brevets ou brevets FR 2 701 974 A1, FR 2 785 001 A1, FR 2 792 664 A1, FR 2 795 109 A1, FR 2 857 389 A1, FR 2 926 570 A1, US 2009 /0 241 685 A1 et US 6 313 545 B1. Cependant, de tels moyens sont inefficaces. En effet, l'applicabilité de ces systèmes en milieux naturels n'est jamais parfaite. Ainsi, l'eau récupérée a, la plupart du temps, une salinité impropre à la consommation : il n'est donc pas possible de seulement traiter l'eau douce pour la rendre potable, une étape de dessalement est indispensable pour pouvoir utiliser cette eau.

De telles sources sont notamment présentes sur la côte méditerranéenne, associée à des zones où les besoins en eau potable se font ressentir. Mais il existe également de telles sources un peu partout dans le monde. Par ailleurs, les aquifères karstiques sont nombreux en France.

En outre, le débit de la plupart de ces sources est compatible avec les besoins en eau potable. La [Table 1] présente des exemples de débits de source en fonction de leur localisation.

**[Table 1]**

| Sources | Coordonnées approximatives (Longitude / Latitude) | Débits (m³.s⁻¹) |
|---|---|---|
| Source de la Vise (Etang de Thau) | 3,61164940 / 43,39798140 | 0.3 |
| La Mortola (Italie) | 7,54662000 / 43,77404000 | 0.005-0.1 |
| Cheka (Liban) | 35,71825000 / 34,34204500 | 6 |
| Crescent Beach (USA) | -81,20611400 / 29,75381700 | 0.3 |

L'utilisation de ces sources pour le dessalement afin de générer de l'eau potable est donc particulièrement intéressante, à la fois car le débit est compatible avec les besoins humains, à la fois car ces sources sont localisées à proximité des populations, notamment lorsque ces sources sont à proximité des côtes, et à la fois car le dessalement de ces sources nécessite moins d'énergie que le dessalement de l'eau de mer.

L'invention consiste à utiliser le principe d'osmose appliquée à deux sources d'eau de salinités différentes, par exemple l'eau de mer et l'eau de source au niveau de l'embouchure avec l'eau de mer, pour dessaler l'eau la moins salée. Ainsi, on peut chercher à dessaler l'eau de source captée au niveau de son embouchure grâce à une osmose avec l'eau de mer. Le captage ne nécessite pas de moyens complexes et notamment pas de moyen d'étanchéité puisqu'on ne cherche pas à récupérer de l'eau douce mais seulement de l'eau moins salée que l'eau de mer. Par ailleurs, le fonctionnement du système est souple car il peut fonctionner avec différentes salinités de l'eau de source captée.

Le procédé et le système selon l'invention sont toutefois adaptés à tous types de source de fluide, à partir du moment où il existe une différence de concentration en solutés entre deux sources de fluide.

L'invention concerne un procédé de dessalement d'un premier fluide au moyen d'un deuxième fluide pour produire un troisième fluide, le premier fluide ayant une salinité inférieure à la salinité du deuxième fluide. De préférence, les premiers et deuxièmes fluides peuvent être des eaux, notamment des eaux de salinités différentes. Ainsi, l'invention peut concerner un procédé de dessalement d'une première eau salée au moyen d'une deuxième eau salée dont la salinité est supérieure à celle de la première eau salée.

Les fluides concernés (notamment le premier fluide, le deuxième fluide et le troisième fluide dont il sera question par la suite) peuvent comprendre au moins un solvant et au moins un soluté. Par exemple, le solvant est de l'eau liquide et les solutés peuvent être des sels minéraux et notamment du sel de type NaCl dont il est question pour le dessalement.

### Le procédé comprend une étape d'osmose retardée PRO et une étape d'osmose inverse RO.

Une unité d'osmose retardée est un système comprenant une première colonne et une deuxième colonne, séparées par au moins une paroi semi-perméable appelée par la suite membrane semi-perméable adaptée pour permettre le principe d'osmose, c'est-à-dire permettant le passage du solvant et bloquant le passage des solutés comme le sel.

La première colonne de l'unité d'osmose retardée est adaptée pour contenir un premier fluide (par exemple une première portion du premier fluide) ; la deuxième colonne de l'unité d'osmose retardée est adaptée pour contenir un deuxième fluide. Par ailleurs, un moyen de mise en pression peut être mis en place dans l'unité d'osmose retardée ou en amont de celle-ci pour générer la pression appliquée sur la deuxième colonne de l'unité d'osmose retardée afin de pressuriser le deuxième fluide, la pression appliquée étant inférieure à la somme de la pression de la première colonne et de la pression osmotique générée par la différence de salinité entre les deux fluides contenus dans les deux colonnes de l'unité d'osmose retardée. L'unité d'osmose retardée permet le fonctionnement selon le principe d'osmose retardée PRO déjà présenté.

Le moyen de mise en pression peut comprendre un moyen d'échange de pression permettant d'échanger la pression entre deux fluides, par exemple mais de manière non limitative, entre le premier fluide (par exemple une deuxième portion de premier fluide, distincte de la première portion) et le deuxième fluide. Selon d'autres alternatives, un moyen de mise en pression peut comprendre une pompe, un vérin, ou un accumulateur.

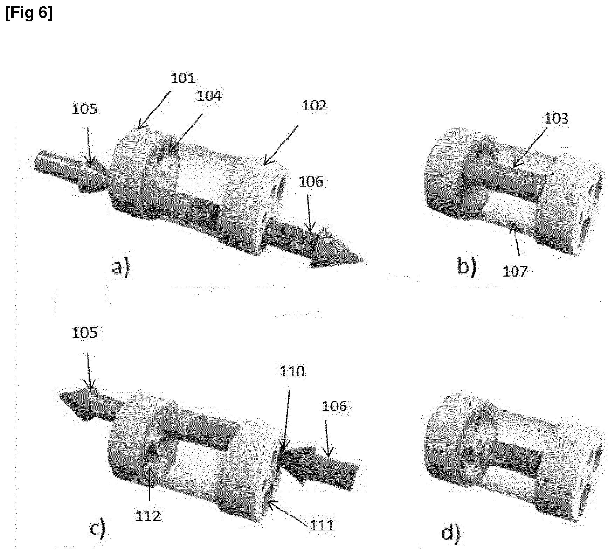

Un moyen d'échange de pression peut par exemple être un échangeur de pression utilisant tous types de technologies connus de l'homme de l'art. La figure [Fig 6] présente un exemple non limitatif d'échangeur de pression.

La figure 6 présente quatre schémas montrant les différentes étapes a), b), c) et d) de fonctionnement d'un exemple d'échangeur de pression. L'échangeur de pression comprend deux embases 101 et 102 et un rotor 107 positionné entre ces deux embases 101 et 102 et de préférence une face du rotor 107 est positionnée contre l'une des faces d'une des embases 101 et 102 et une autre face du rotor 107 est positionnée contre l'autre des embases 101 et 102. Les embases 101 et 102 et le rotor 107 ont des formes sensiblement cylindriques. Les axes longitudinaux des embases 101 et 102 et du rotor 107 sont confondus. Le rotor 107 est entraîné en rotation autour de cet axe longitudinal, par exemple par un moteur électrique ou tout autre moyen de mise en rotation connu de l'homme du métier. Au contraire, les embases 101 et 102 sont fixes : elles ne sont pas entraînées en rotation.

L'embase 101 comprend une entrée 112 du fluide 105 et une sortie 104 du fluide 105 alors que l'embase 102 comprend une entrée 110 de fluide 106 et une sortie 111 de fluide 106. Le rotor 107 comprend une ou plusieurs colonnes 103, de préférence plusieurs colonnes 103, positionnées longitudinalement dans le rotor 107, ces colonnes 103 s'étendant d'une extrémité longitudinale du rotor 107 à l'autre extrémité longitudinale du rotor 107, ces colonnes étant non coaxiales avec le rotor. Autrement dit, les colonnes 103 sont débouchantes et permettent ainsi aux colonnes 103 de pouvoir communiquer avec les entrées et sorties 104, 112, 110 et 111 des embases 101 et 102. Ces colonnes 103 sont donc des trous débouchants réalisés dans le rotor 107. Elles permettent le passage des fluides 105 et 106.

Le principe de fonctionnement de l'échangeur de pression est le suivant. Tout d'abord, selon le schéma a), le fluide 105 arrive à basse pression dans l'entrée 112 de l'embase 101. Le fluide 105 constitue le fluide à pressuriser. Comme le rotor 107 comprenant les colonnes 103 tourne autour de l'axe longitudinal, il arrive un moment où au moins l'une des colonnes 103 entre en communication avec l'entrée 112. Ainsi, le fluide 105 à basse pression peut pénétrer dans au moins l'une des colonnes 103. Comme le rotor 107 continue à tourner, il arrive un moment, selon le schéma b), au cours de cette rotation au cours de laquelle la colonne 103 n'est plus en communication avec l'entrée 112 de l'embase 101 et au cours de laquelle la colonne 103 n'est en communication avec aucune des entrées/sorties 104, 110 et 111. Ainsi, le fluide 105 est emprisonné dans la colonne 103 à basse pression.

Puis, le rotor 107 continuant sa rotation, il arrive un moment où, selon le schéma c), la colonne 103 arrive en communication avec l'entrée 110 du fluide 106 à haute pression (haute pression par rapport au fluide 105 qui arrive à une plus basse pression, les termes haut et bas étant relatifs). Le fluide 106 est le fluide pressurisé qui sert à pressuriser le fluide 105.

La pression du fluide 106 étant supérieure à celle du fluide 105, le fluide 106 pénètre dans la colonne 103 et vient pressuriser le fluide 105 à la pression d'entrée du fluide 106. Puis la colonne 103 vient en communication avec la sortie 104 de l'embase 101, de manière à permettre l'évacuation du fluide pressurisé 105. Ainsi, le système permet d'échanger la pression entre un fluide arrivant à une haute pression, le fluide 106, à un fluide arrivant à une pression inférieure à cette haute pression, le fluide 105, et ressortant à une pression égale ou sensiblement égale à cette haute pression.

Puis, le rotor 107 continuant encore sa rotation, selon le schéma d), le fluide 106 sous pression est emprisonné dans la colonne 103 qui n'est plus en communication avec aucune des entrées/sorties 104, 112, 110 et 111.

Enfin, le rotor 107 poursuivant sa rotation, selon le schéma a), le fluide 106 entre en communication avec sa sortie 111 de l'embase 102. Ainsi, il atteint une pression nulle ou une pression équivalente à la pression au niveau de la sortie 111. Puis le fluide 105 peut entrer lorsque la colonne 103 arrive en communication avec l'entrée 112 et le fluide 105 peut entrer lorsque sa pression est supérieure ou égale à la pression à la sortie 111 du fluide 106. Le cycle peut alors recommencer. Cet échangeur de pression est un système simple permettant d'échanger la pression entre deux fluides. Il est particulièrement adapté aux procédés et systèmes de dessalement.

Une unité d'osmose inverse est un système comprenant une première colonne et une deuxième colonne, ces colonnes étant indépendantes de l'unité d'osmose retardée déjà présentée, séparées par au moins une paroi semi-perméable appelée par la suite membrane semi-perméable adaptée pour permettre le principe d'osmose, c'est-à-dire permettant le passage du solvant et bloquant le passage des solutés comme le sel. La première colonne de l'unité d'osmose inverse est adaptée pour contenir un fluide, par exemple un troisième fluide ; elle sera appelée par la suite troisième colonne ; la deuxième colonne de l'unité d'osmose inverse est adaptée pour contenir un autre fluide plus salé que le troisième fluide, par exemple le premier fluide, de préférence la deuxième portion du premier fluide qui ressort du moyen de mise en pression. Cette colonne sera appelée par la suite, quatrième colonne. Par ailleurs, un moyen de mise en pression peut être mis en place dans l'unité d'osmose inverse ou en amont de celle-ci pour générer la pression appliquée sur la quatrième colonne et ainsi pressuriser le fluide le plus salé (la deuxième portion de premier fluide par exemple), cette pression étant supérieure à la pression osmotique existant et dépendant de la différence de salinité des deux fluides contenus dans les colonnes de l'unité d'osmose inverse. L'unité d'osmose inverse permet le fonctionnement selon le principe RO déjà présenté. Ainsi, l'unité d'osmose inverse se distingue de l'unité d'osmose retardée par la pression générée qui est inférieure (dans le cas de l'unité d'osmose retardée) ou supérieure (dans le cas de l'unité d'osmose inverse) à la pression osmotique.

En outre, le procédé de l'invention comprend les étapes suivantes :
* on fait entrer au moins une première portion du premier fluide et le deuxième fluide dans une unité d'osmose retardée, le deuxième fluide entrant dans l'unité d'osmose retardée à une pression supérieure ou égale, de préférence une pression égale, à la pression à laquelle le premier fluide entre dans l'unité d'osmose retardée ; en d'autres termes, la pression d'entrée du deuxième fluide dans l'unité d'osmose retardée est supérieure à la pression d'entrée du premier fluide dans l'unité d'osmose retardée, la différence entre ces deux pressions restant inférieure à la pression osmotique générée par la différence de salinité des premier et deuxième fluides afin d'éviter à l'unité de fonctionner en osmose inverse.
* on pressurise au moins une deuxième portion du premier fluide, de préférence cette deuxième portion étant distincte de la première portion, au moyen d'un échange de pression avec le deuxième fluide sous pression sortant de l'unité d'osmose retardée, par exemple par un moyen d'échange de pression tel qu'un échangeur de pression.
* on fait entrer la deuxième portion de premier fluide pressurisé dans une unité d'osmose inverse pour récupérer un troisième fluide, la salinité du troisième fluide étant inférieure à la salinité du premier fluide.

En utilisant une première portion de premier fluide dans l'unité d'osmose retardée et une deuxième portion (c'est-à-dire une portion différente de celle qui passe dans l'unité d'osmose retardée) de premier fluide, on peut générer une pression servant au moyen d'échange de chaleur pour pressuriser le premier fluide, via la deuxième portion, sans utiliser la première portion de premier fluide sortant de l'unité d'osmose retardée. En effet, en sortant de cette unité, cette première portion de premier fluide est plus salée qu'en entrant. Il n'est donc pas intéressant de l'utiliser pour chercher à la dessaler dans l'unité d'osmose inverse, d'où l'intérêt d'utiliser deux portions différentes de premier fluide, distinctes l'une de l'autre.

L'échange de pression générée par l'étape de pressurisation de la deuxième portion de premier fluide, permet de mettre le premier fluide à une pression supérieure ou égale, de préférence égale, à la pression osmotique générée dans l'unité d'osmose inverse. Par exemple, lorsque la différence de salinité entre l'eau de mer et l'eau de source à l'embouchure est supérieure à la différence de salinité entre l'eau de source à l'embouchure et l'eau potable, la pression osmotique générée dans cette unité d'osmose retardée est supérieure à la pression osmotique générée dans l'unité d'osmose inverse. Ainsi, la pression du deuxième fluide en sortie de l'unité d'osmose retardée est suffisante pour générer une pression du premier fluide suffisante pour générer une osmose inverse dans l'unité d'osmose inverse.

Si la pression osmotique générée dans l'unité d'osmose retardée n'est pas suffisante pour réaliser une osmose inverse dans l'unité d'osmose inverse après l'échange de pression du deuxième fluide au premier fluide, un moyen supplémentaire de mise en pression peut être utilisé pour pressuriser un peu plus le premier fluide pour générer une pression de ce fluide supérieure à la pression osmotique et ainsi permettre une osmose inverse. Ce moyen supplémentaire peut être par exemple une pompe alimentée par un moteur électrique, des batteries et/ou des panneaux solaires, et/ou des éoliennes.

Selon l'invention, le deuxième fluide est de l'eau de mer et le premier fluide est une eau dont la salinité est inférieure (strictement inférieure) à celle de l'eau de mer (eau d'aquifère ou eau de source souterraine par exemple). De ce fait, l'eau à dessaler est l'eau moins salé que l'eau de mer. Ainsi, le procédé et le système de dessalement nécessitent moins d'énergie. De plus, l'eau dont la salinité augmente lors de l'osmose inverse est l'eau du premier fluide. Ainsi, l'eau rejetée est moins salée que si l'eau de mer avait été utilisée comme premier fluide. L'impact environnemental est donc réduit.

De manière avantageuse, l'étape d'osmose retardée peut comprendre les étapes suivantes :
- on fait entrer la première portion de premier fluide dans un premier réservoir, l'unité d'osmose retardée comprenant le premier réservoir et un deuxième réservoir ; par exemple : le premier réservoir peut être la première colonne de l'unité d'osmose retardée, les premier et deuxième réservoirs étant séparés par au moins une première paroi semi-perméable.
- on pressurise le deuxième fluide en entrée du deuxième réservoir, la pression appliquée sur le deuxième fluide étant inférieure à la somme de la pression d'entrée du premier fluide dans l'unité d'osmose retardée et de la pression osmotique générée par la différence de salinité entre le premier fluide et le deuxième fluide en entrée de l'unité, de manière à ce qu'un solvant du premier fluide (par exemple l'eau) traverse la première paroi semi-perméable et se mélange au deuxième fluide.
- on fait entrer le deuxième fluide pressurisé dans le deuxième réservoir, par exemple, le deuxième réservoir est la deuxième colonne de l'unité d'osmose retardée, les premières et deuxièmes colonnes de cette unité sont séparées par une membrane semi-perméable. Cette membrane semi-perméable permet les processus d'osmose entre les deux fluides contenus dans les deux réservoirs de l'unité d'osmose retardée. L'osmose opérant par le passage du solvant à travers la paroi semi-perméable est retardée par la pression appliquée au deuxième fluide mais la contrainte appliquée à la valeur maximale de cette pression permet de ne pas inverser le passage du solvant du deuxième fluide au premier fluide. Ainsi, lors de cette étape, le premier fluide tend à voir la salinité augmentée en restant inférieure à la salinité du deuxième fluide, le principe d'osmose cherchant à établir un équilibre des salinités des deux fluides. Le deuxième fluide tend à voir sa salinité diminuée. L'osmose contribue alors naturellement et économiquement au maintien de la pression du deuxième fluide.
- on fait circuler la première portion de premier fluide dans le premier réservoir depuis une entrée vers une sortie du premier fluide et on fait circuler le deuxième fluide dans le deuxième réservoir depuis une entrée vers une sortie du deuxième fluide ; de ce fait, on peut générer des débits de fluide.

Cette unité d'osmose retardée permet de générer/maintenir, en sortie de l'unité d'osmose retardée, un deuxième fluide sous pression.

Avantageusement, l'étape d'osmose inverse peut comprendre les étapes suivantes :
- on fait entrer la deuxième portion de premier fluide dans un quatrième réservoir, l'unité d'osmose inverse comprenant le quatrième réservoir ; par exemple, le quatrième réservoir peut être l'une des colonnes de l'unité d'osmose inverse, par exemple la quatrième colonne.
- on applique une pression sur la deuxième portion de premier fluide afin qu'un solvant du premier fluide traverse une deuxième paroi semi-perméable pour entrer dans un troisième réservoir, le solvant du premier fluide formant ainsi un troisième fluide dans le troisième réservoir. Le troisième réservoir peut être par exemple l'autre colonne de l'unité d'osmose inverse, par exemple la troisième colonne, les deux colonnes étant séparées par une membrane semi-perméable correspondant à la paroi semi-perméable. Seul le solvant passe par la paroi semi-perméable. Ainsi, la salinité du troisième fluide est suffisamment faible pour être potable. L'osmose inverse est donc réalisée entre le premier fluide sous pression et le troisième fluide constitué essentiellement par le solvant du premier fluide.
- on fait ressortir le troisième fluide par une sortie de l'unité d'osmose inverse, cette sortie étant connectée au troisième réservoir. Ainsi, on peut récupérer l'eau dessalée afin de l'utiliser pour les besoins humains, pour boire, se laver ou encore pour l'irrigation.

Selon l'invention, le deuxième fluide est de l'eau de mer et le premier fluide est de l'eau dont la salinité est comprise entre 2 et 18g/L, de préférence entre 2 et 7g/L. L'eau de mer a une salinité de l'ordre de 35g/L, généralement comprise entre 30 et 40g/L. Ainsi, le premier fluide a une salinité inférieure à l'eau de mer. Il est donc plus facile de dessaler le premier fluide (moins salée que l'eau de mer). De plus, à l'issue de l'étape d'osmose retardée, l'eau de mer voit sa salinité réduire et le premier fluide voit sa salinité augmenter tout en restant inférieure à la salinité de l'eau de mer. Ainsi, les eaux rejetées dans l'environnement ont une salinité équivalente ou inférieure à l'eau de mer. Cette caractéristique est particulièrement avantageuse pour l'environnement local, notamment pour la faune et la flore locale, qui ne subissent pas une salinité supérieure à celle de l'eau de mer.

Selon un mode de réalisation de l'invention, on peut capter le premier fluide au niveau d'une sortie sous-marine d'une source souterraine ou d'un aquifère côtier. Pour cela, on peut utiliser un moyen de captage de l'eau qui peut par exemple comprendre un tuyau de collecte et une pompe pour entraîner l'eau dans le tuyau de collecte ou se servir simplement des effets gravitaires engendrés par les différences de densité des fluides, l'eau de salinité plus élevée ayant une densité plus élevée qu'une eau de salinité moins élevée. Par exemple, l'eau de mer a une densité plus grande que l'eau de source. En captant ainsi une eau souterraine au niveau de l'embouchure, on récupère une eau légèrement salée, mais ce captage ne nécessite pas de moyens complexes pour récupérer de l'eau douce. Ce mode de réalisation est particulièrement adapté pour récupérer les eaux provenant de sources d'aquifères karstiques qui débouchent à proximité des côtes, et donc proches des besoins locaux en eau douce ou potable. De plus, en débouchant dans un environnement marin, on peut aisément disposer de deux eaux de salinités différentes, l'eau de mer et l'eau de source captée, légèrement salée. Ces eaux sont donc aptes à la mise en place des procédés d'osmose, notamment en vue du dessalement de l'eau de source captée.

Selon une variante du procédé selon l'invention, on peut prétraiter au moins l'un des premier et deuxième fluides avant leur utilisation, de préférence on peut prétraiter les premier et deuxième fluides avant leur utilisation.

Par prétraitement, on entend tout moyen de filtration tels que des filtres ou moyen permettant d'éliminer les micro-organismes présents dans l'eau, les sels minéraux en excès, le sable, les éventuels petits graviers etc... qui pourraient entraîner un colmatage du système ou être nocifs à la consommation humaine ou animale finale. En traitant les deux fluides, on se prémunit mieux des risques d'avaries du système ou du procédé.

Par utilisation, on entend aussi bien l'utilisation dans le procédé de dessalement décrit, que l'utilisation finale. Ainsi, pour l'utilisation dans le procédé, le prétraitement aura lieu avant l'utilisation des fluides dans le procédé de dessalement décrit précédemment. Pour l'utilisation finale, c'est-à-dire l'utilisation par le consommateur final, le prétraitement peut avoir lieu avant le procédé de dessalement et/ou bien après le procédé de dessalement, avant l'utilisation par le consommateur. Avec un prétraitement avant et après le procédé de dessalement, les conditions d'hygiène et de vérification de la qualité de l'eau potable sont améliorées.

De manière avantageuse, on peut récupérer le premier fluide ressortant de l'unité d'osmose inverse pour le faire entrer dans l'unité d'osmose retardée en remplacement du deuxième fluide ou en mélange avec celui-ci. De ce fait, on évite de rejeter dans l'environnement le premier fluide dont la salinité a été augmentée dans l'unité d'osmose inverse et on le réutilise dans le procédé pour augmenter les performances du système. Cela est particulièrement avantageux lorsque la salinité du premier fluide ressortant de l'unité d'osmose inverse est supérieure à la salinité du deuxième fluide. Ainsi, on évite le rejet d'une eau plus salée que l'eau de mer qui pourrait avoir un impact négatif sur l'environnement marin local.

Selon une mise en œuvre du procédé selon l'invention, on peut utiliser une source d'énergie supplémentaire, de préférence éolien, hydrolien, houlomoteur, solaire pour pressuriser le premier fluide en amont de l'unité d'osmose inverse et/ou le deuxième fluide en amont de l'unité d'osmose retardée. Ainsi, si la pression du deuxième fluide en sortie de l'unité d'osmose retardée est insuffisante pour permettre l'osmose inverse dans l'unité d'osmose inverse, on peut pressuriser un peu plus le premier fluide, notamment la deuxième portion, par l'intermédiaire de cette source d'énergie supplémentaire et d'un moyen de mise en pression, par exemple une pompe.

Ainsi, la pression peut être suffisante pour réaliser le dessalement du premier fluide (la deuxième portion). D'un point de vue opérationnel, cette mise en pression permet aussi d'augmenter les débits de production du troisième fluide si la demande en eau augmente.

De la même manière ce type de source d'énergie supplémentaire peut être utilisé pour pressuriser le deuxième fluide en amont de l'unité d'osmose retardée.

De préférence, en complément du moyen de mise en pression à l'entrée de l'unité d'osmose retardée, on peut pressuriser le deuxième fluide arrivant dans l'unité d'osmose retardée par échange de pression avec le deuxième fluide déjà pressurisé sortant de l'unité d'osmose retardée. L'utilisation de cette pression pour pressuriser le deuxième fluide en amont de l'unité d'osmose retardée permet d'augmenter l'efficacité du système et d'abaisser la consommation d'énergie pour pressuriser le deuxième fluide en amont de l'unité d'osmose retardée. Pour échanger les pressions des deux fluides, on peut utiliser un moyen d'échange de pression tel qu'un échangeur de pression déjà présenté.

Selon une mise en œuvre avantageuse de l'invention, on peut échanger la pression entre la deuxième portion du premier fluide arrivant dans l'unité d'osmose inverse avec la deuxième portion du premier fluide sortant de l'unité d'osmose inverse pour abaisser la consommation d'énergie lors de la mise en pression du premier fluide tout en limitant les pertes d'énergie du système. Ainsi, on peut accélérer le passage du solvant à travers la paroi semi-perméable et donc augmenter le débit de sortie du troisième fluide. Cette caractéristique permet aussi d'augmenter la pression de la deuxième portion du premier fluide pour permettre son dessalement par un procédé d'osmose inverse lorsque la pression de la deuxième portion du premier fluide, sortant du moyen d'échange de pression avec le deuxième fluide arrivant de l'unité d'osmose retardée, n'est pas suffisante.

De manière préférée, la salinité du troisième fluide en sortie de l'unité d'osmose inverse peut être inférieure à 1 g/L, pour respecter certaines règlementations, notamment la règlementation américaine, et préférentiellement inférieure à 500 mg/L pour respecter les préconisations de l'OMS, et de manière encore préférée proche de 200 mg/L pour limiter encore le goût du sel contenue dans l'eau pour le consommateur et/ou limiter l'apport en sel, notamment pour certains régimes spéciaux où la consommation en sel est à limiter. Ainsi, la salinité du troisième fluide est compatible avec la consommation humaine/animale.

Il est décrit également un système de dessalement d'un premier fluide au moyen d'un deuxième fluide, le deuxième fluide ayant une salinité supérieure au premier fluide. Le système comprend une unité d'osmose retardée et une unité d'osmose inverse. Ainsi, le système comprend quatre colonnes : deux pour l'unité d'osmose retardée et deux pour l'unité d'osmose inverse. L'unité d'osmose retardée comprend une entrée du premier fluide (par exemple une première portion du premier fluide), une entrée du deuxième fluide, une sortie du premier fluide (par exemple de la première portion du premier fluide) et une sortie de deuxième fluide. De plus, l'unité d'osmose inverse comprend une entrée du premier fluide (par exemple une deuxième portion du premier fluide), une sortie d'un troisième fluide et une sortie du premier fluide (par exemple une deuxième portion du premier fluide). En outre, le système comprend un premier moyen d'échange de pression pour échanger la pression du deuxième fluide en sortie de l'unité d'osmose retardée avec le premier fluide (par exemple une deuxième portion du premier fluide) entrant dans l'unité d'osmose inverse. Le système est adapté pour la mise en œuvre du procédé de dessalement selon l'une des caractéristiques précédentes et notamment pour la mise en pression du deuxième fluide en amont de l'unité d'osmose retardée, il peut comprendre un moyen de pressurisation du deuxième fluide, ce moyen de pressurisation étant positionné en amont de l'unité d'osmose retardée, étant apte à générer une pression comprise entre la pression du premier fluide en entrée de l'unité d'osmose retardée (par exemple la première portion du premier fluide entrant dans l'unité d'osmose retardée) et la somme de la pression du premier fluide en entrée de l'unité d'osmose retardée (par exemple la deuxième portion de premier fluide entrant dans l'unité d'osmose retardée) avec la pression osmotique générée par la différence de salinité des premier et deuxième fluides arrivant dans l'unité d'osmose retardée. Ce moyen de pressurisation peut être une pompe ou un échangeur de pression par exemple. Ce moyen de pressurisation est connecté à l'entrée du deuxième fluide dans la deuxième colonne de l'unité d'osmose retardée.

Ainsi, le premier fluide (par exemple, la première portion du premier fluide) est contenu dans la première colonne de l'unité d'osmose retardée et le deuxième fluide dans la deuxième colonne de l'unité d'osmose retardée. La sortie de la deuxième colonne de l'unité d'osmose retardée est connectée à un moyen d'échange de pression, ce moyen d'échange de pression étant également connecté à l'entrée de la deuxième colonne de l'unité d'osmose inverse, soit par la suite quatrième colonne, pour échanger la pression du deuxième fluide pressurisé sortant de l'unité d'osmose retardée avec le premier fluide à pressuriser. Le premier fluide (par exemple, la deuxième portion du premier fluide, distincte de la première portion) est contenu dans la quatrième colonne et le troisième fluide ressort par la première colonne de l'unité d'osmose inverse, soit la troisième colonne.

La description précédente emploie le terme de « colonne » pour les unités d'osmose retardée et inverse mais il est évident que ce terme pourrait être remplacé par « réservoir » ou « enceinte », le système n'étant nullement limité par la forme du réservoir contenant le fluide.

Le système permet ainsi de dessaler le premier fluide (notamment la deuxième portion du premier fluide), tout en rejetant un fluide dont la salinité est inférieure à celle de l'eau de mer, limitant l'impact environnemental. De plus, ce système permet de réduire la consommation d'énergie pour dessaler l'eau et donc de réduire le coût du système et du procédé de dessalement.

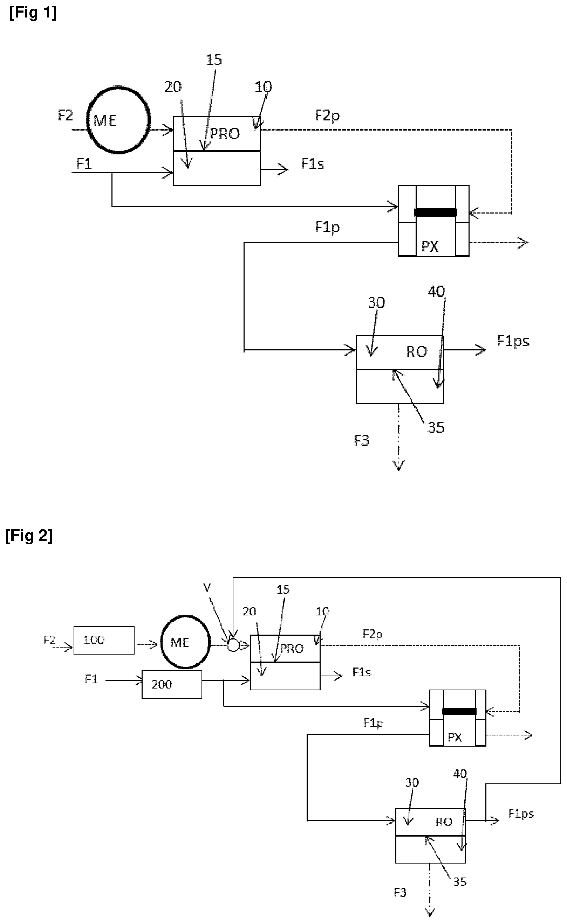

La [Fig 1] présente de manière schématique et non limitative un mode de réalisation du système pour la mise en œuvre du procédé selon l'invention. Le système comprend une unité d'osmose retardée PRO et une unité d'osmose inverse RO. L'unité d'osmose retardée PRO comprend deux enceintes 10 et 20 séparées par une paroi semi-perméable 15 telle qu'une membrane semi-perméable. L'unité d'osmose inverse RO comprend deux enceintes 30 et 40 séparées par une paroi semi-perméable 35 qui peut être une membrane semi-perméable. Ainsi, le système comprend au moins quatre enceintes 10, 20, 30 et 40 et deux parois semi-perméables 15 et 35.

Par ailleurs, le système comprend un moyen d'échange de pression PX. De plus, le système comprend un moyen de pressurisation ME du deuxième fluide F2 en amont de l'unité d'osmose retardée PRO pour pressuriser le deuxième fluide en amont de l'unité d'osmose retardée PRO. Ce moyen de pressurisation ME peut être une pompe par exemple, commandée par un moteur électrique.

Une portion du premier fluide F1 dispose d'une entrée dans la première enceinte 20 de l'unité d'osmose retardée PRO et d'une sortie sur cette même enceinte 20.

Dans l'unité d'osmose retardée PRO, le solvant de cette portion de premier fluide F1, moins salé que le deuxième fluide F2, traverse la paroi semi-perméable 15 et ainsi se mélange avec le deuxième fluide F2.

Le deuxième fluide F2 est mis sous pression, la pression générée étant comprise entre la pression du premier fluide F1 arrivant dans l'enceinte 20 et la pression égale à la somme de la pression du premier fluide F1 arrivant dans l'enceinte 20 avec la pression osmotique générée par la différence de salinité des premier et deuxième fluides arrivant dans l'unité d'osmose retardée.

Comme la sortie du deuxième fluide pressurisé F2p est connectée à un moyen d'échange de pression PX, dont l'entrée empêche parfois (selon le cycle de fonctionnement de l'échangeur de pression déjà décrit) le passage du fluide F2, l'ajout de solvant dans le deuxième fluide F2 fait augmenter le débit de ce deuxième fluide F2p en sortie de l'unité d'osmose retardée PRO. Le fluide ressortant de cette unité d'osmose retardée est alors le deuxième fluide pressurisé F2p, sa pression étant supérieure à la pression à laquelle il est entré dans l'unité d'osmose retardée.

Avantageusement, le deuxième fluide F2 est de l'eau de mer et le premier fluide F1 est de l'eau sortant de l'embouchure d'une source souterraine avec l'eau marine.

Le premier fluide F1s ressort de la première enceinte 20 plus salé qu'il n'y est rentré et peut être rejeté dans l'environnement, notamment parce qu'il ressort moins salé que le deuxième fluide F2. Le deuxième fluide F2 arrive par une entrée dans la deuxième enceinte 10 de l'unité d'osmose retardée PRO et ressort sous une forme diluée et pressurisée F2p avec un débit égal à son débit d'entrée auquel s'ajoute le débit du solvant du premier fluide F1 ayant transité par la membrane 15. La sortie de la deuxième enceinte 10 du fluide F2p est connectée à une entrée du moyen d'échange de pression PX. Une deuxième entrée sur le moyen d'échange de pression PX permet l'admission d'une portion du premier fluide F1, de préférence cette portion est distincte de la portion de premier fluide pénétrant dans l'enceinte 20 de l'unité d'osmose retardée PRO, dans le moyen d'échange de pression PX. Ce moyen d'échange de pression PX n'est pas décrit mais peut correspondre à celui de la [Fig 6]. Une sortie du moyen d'échange de pression PX permet de faire ressortir le fluide F2p à pression ambiante (pression du fluide F1). Une autre sortie permet de faire sortir la portion de premier fluide sous pression F1p. Cette sortie est connectée à l'unité d'osmose inverse RO, et notamment à la quatrième enceinte 30. Le premier fluide ressort de l'unité d'osmose inverse RO plus salé qu'il n'y est entré et sous pression F1ps.

Le moyen d'échange de pression PX sert à transférer la pression des fluides pressurisés pour faire fonctionner l'unité d'osmose inverse RO.

Dans l'unité d'osmose inverse RO, le solvant du premier fluide F1p (de la portion de fluide entrant dans l'unité d'osmose inverse RO) traverse la paroi semi-perméable 35 pour atteindre la troisième enceinte 40, et générer le troisième fluide F3 de salinité inférieure à F1p, et de préférence avec une salinité proche de l'eau douce ou de l'eau potable. Ainsi, le troisième fluide qui ressort de la troisième enceinte 40, rentre dans cette enceinte par la paroi semi-perméable 35. Autrement, aucun autre fluide n'entre dans cette troisième enceinte 40.

La [Fig 2] présente, de manière schématique et non limitative un deuxième mode de réalisation du procédé et du système selon l'invention. Les mêmes références correspondent aux mêmes éléments que ceux de la [Fig 1] et ne seront pas redétaillés.

La [Fig 2] diffère de la [Fig 1] en ce que d'une part le système dispose d'un premier moyen de prétraitement 100 pour filtrer par exemple le deuxième fluide F2 en amont du moyen de pressurisation ME et de l'unité d'osmose retardée PRO. Ce moyen de prétraitement 100 peut comprendre un ou plusieurs filtres pour éliminer microorganismes, sels minéraux en excès, sable, graviers etc... Le système de la [Fig 2] comporte en outre un deuxième moyen de prétraitement 200 pour filtrer par exemple le premier fluide F1 en amont de l'unité d'osmose retardée PRO. Ce moyen de prétraitement 200 peut comprendre un ou plusieurs filtres pour éliminer microorganismes, sels minéraux en excès, sable, graviers etc...

La [Fig 2] se distingue de la [Fig 1] également par la connexion de la sortie de la portion de premier fluide salé et sous pression F1ps sortant de l'unité d'osmose inverse RO à une vanne trois positions V. Cette vanne trois positions V est également connectée d'une part à la sortie du moyen de pressurisation ME et d'autre part à l'entrée de la deuxième enceinte 10 de l'unité d'osmose retardée. Cette vanne trois positions V permet d'introduire, en entrée de l'unité d'osmose retardée PRO, soit uniquement le deuxième fluide F2 sortant du moyen de pressurisation ME, soit uniquement la portion de premier fluide pressurisé et salé F1ps sortant de l'unité d'osmose inverse RO, soit un mélange du deuxième fluide F2 sortant du moyen de pressurisation ME avec la portion de premier fluide pressurisé et salé F1ps sortant de l'unité d'osmose inverse RO. Le mélange peut s'opérer dans la vanne trois positions V elle-même ou dans un moyen de mélange tel qu'un mélangeur permettant d'améliorer l'homogénéité du fluide ainsi obtenue. Ce moyen de mélange peut être placé en aval de la vanne trois positions V, avant l'entrée du mélange de fluides dans l'enceinte 10 de l'unité d'osmose retardée PRO. Autrement dit, un moyen de mélange tel qu'un mélangeur peut être positionné entre la vanne trois positions V et l'entrée de la deuxième enceinte 10 de l'unité d'osmose retardée PRO. Cette vanne trois positions V peut être commandée pour permettre l'introduction totale ou partielle de la portion de premier fluide pressurisé et salé, notamment lorsque sa salinité est supérieure à celle du deuxième fluide. Un deuxième moyen de pressurisation (non représenté) peut également être positionné en amont de la vanne trois positions V pour pressuriser le premier fluide pressurisé et salé F1ps. Ainsi ce deuxième moyen de pressurisation serait positionné entre la sortie de la quatrième enceinte 30 de l'unité d'osmose inverse RO et la vanne trois positions V.

La portion de fluide F1ps ressortant plus salé de l'unité d'osmose inverse peut donc servir comme deuxième fluide. Par ailleurs, lorsque la salinité du premier fluide salé et sous pression F1ps est supérieure à la salinité de l'eau de mer, la configuration de la [Fig 2] permet de diluer la portion de fluide F1ps dans le compartiment 10 et de ne pas le rejeter à une salinité supérieure à celle de l'eau de mer dans un environnement marin où il pourrait avoir un effet néfaste pour la faune et la flore. De plus, dans ce cas, lorsque le premier fluide salé et pressurisé F1ps a une salinité supérieure à celle du deuxième fluide F2, les performances de l'unité d'osmose retardée sont augmentées et donc les performances du système complet et du procédé de dessalement.

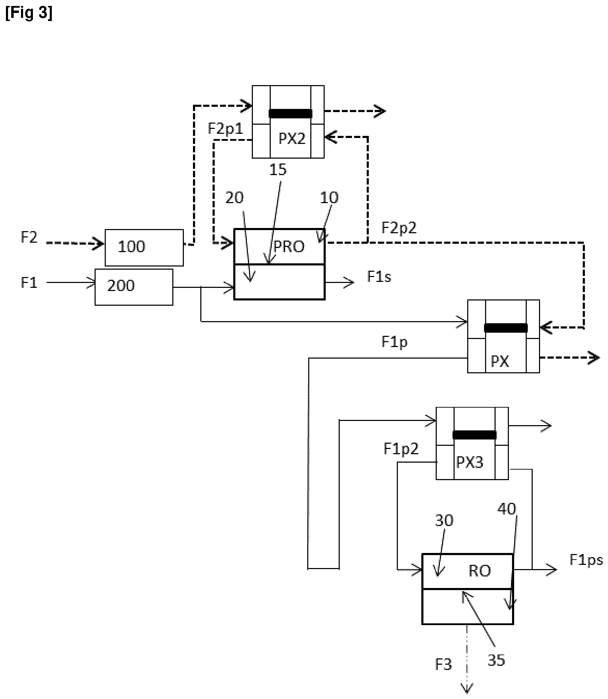

La [Fig 3] illustre de manière schématique et non limitative, un troisième mode de réalisation de l'invention. Les mêmes références correspondent aux mêmes éléments que ceux des [Fig 1] ou [Fig 2] et ne seront pas redétaillés.

La figure [Fig 3] comprend, deux moyens d'échange de pression, tels que des échangeurs de pression, PX2 et PX3, en plus du moyen d'échange de pression PX, identique aux [Fig 1] et [Fig 2].

Le deuxième moyen d'échange de pression PX2 dispose d'une entrée du deuxième fluide F2 sortant du moyen de prétraitement 100 du deuxième fluide F2 et du moyen de mise sous pression (non représenté sur cette figure). Ainsi, l'entrée du deuxième fluide F2 du deuxième moyen d'échange de pression PX2 est connectée à la sortie du moyen de prétraitement 100 et de mise sous pression du deuxième fluide F2.

Le deuxième moyen d'échange de pression PX2 dispose d'une entrée du deuxième fluide pressurisé F2p2, sortant de l'unité d'osmose retardée PRO. Ainsi, l'entrée du deuxième fluide pressurisé F2p2 du deuxième moyen d'échange de pression PX2 est connectée à la sortie de deuxième fluide pressurisé F2p2 de l'unité d'osmose retardée PRO. Ce fluide ressort du moyen d'échange de pression PX2 à une pression inférieure à laquelle il y ait entré et peut être rejeté dans l'environnement, notamment car sa salinité est inférieure à celle du deuxième fluide F2, par exemple l'eau de mer. Dans le moyen d'échange de pression PX2, le deuxième fluide pressurisé F2p2 échange sa pression, maintenu notamment par la pression osmotique générée par l'unité d'osmose retardée PRO, avec le deuxième fluide F2 en amont de l'unité d'osmose retardée PRO. Ainsi, le deuxième fluide F2 est pressurisé dans le moyen d'échange de pression PX2, avant d'être introduit dans l'entrée de deuxième fluide F2 dans la deuxième enceinte 10 de l'unité d'osmose retardée PRO. De ce fait, la pression du deuxième fluide F2 entrant dans l'unité d'osmose retardée PRO sera maintenu naturellement par l'unité du PRO, ce qui va permettre d'économiser de l'énergie pour maintenir la pression en deuxième fluide F2p2 en sortie de l'unité d'osmose retardée PRO. De ce fait, il est alors possible d'augmenter la pression du premier fluide, par échange de pression, dans le moyen d'échange de pression PX. Par conséquent, cette augmentation de pression du premier fluide permet d'améliorer la rentabilité du dessalement, notamment lorsque la différence de salinité entre le premier fluide et le deuxième fluide est inférieure à la différence de salinité entre le premier fluide et le troisième fluide.

L'augmentation de la pression da la portion du premier fluide en amont de l'unité d'osmose inverse RO permet également de pouvoir augmenter le débit du troisième fluide F3 en sortie de l'unité d'osmose inverse RO.

Le deuxième moyen d'échange de pression PX2 dispose d'une entrée du deuxième fluide F2 sortant du moyen de prétraitement.

Un troisième moyen d'échange de pression PX3 peut être mis en place si la pression de la portion du premier fluide F1p est inférieure à la pression de ce même premier fluide en sortie de l'unité d'osmose inverse F1ps. Cette configuration est typiquement rencontrée lorsque le premier fluide est pressurisé en amont de l'unité d'osmose inverse et après l'échange de pression PX. Le troisième moyen d'échange de pression PX3 dispose d'une entrée d'une portion du premier fluide pressurisé F1p, sortant du premier moyen d'échange de pression PX. Ainsi, l'entrée de la portion de premier fluide pressurisé F1p du troisième moyen d'échange de pression PX3 est connectée à la sortie du premier fluide pressurisé F1p du premier moyen d'échange de pression PX.

Le troisième moyen d'échange de pression PX3 dispose d'une entrée d'une portion de premier fluide pressurisé et salé F1ps sortant de l'unité d'osmose inverse RO. Ainsi, l'entrée du premier fluide pressurisé et salé F1ps du troisième moyen d'échange de pression PX3 est connectée à la sortie de la quatrième enceinte 30 de l'unité d'osmose inverse RO.

La portion de premier fluide pressurisé et salé F1ps ressort du troisième moyen d'échange de pression PX3 à une pression inférieure à laquelle il y ait entré. Il peut être rejeté dans l'environnement si sa salinité est normalement inférieure à celle du fluide F2, par exemple l'eau de mer. Selon une variante, il peut être réintroduit dans la deuxième enceinte 10 de l'unité d'osmose retardée, opérant ainsi le même principe que sur la [Fig 2]. Dans le troisième moyen d'échange de pression PX3, le premier fluide pressurisé et salé F1ps échange sa pression avec le premier fluide pressurisé F1p sortant du premier moyen d'échange de pression PX. Ainsi, le premier fluide pressurisé F1p est encore pressurisé dans le troisième moyen d'échange de pression PX3. Il ressort ainsi du troisième moyen d'échange de pression PX3 sous la forme F1p2 de premier fluide à une pression supérieure ou égale à celle de F1p. Cette sortie de premier fluide pressurisé à une pression supérieure ou égale à celle de F1p du troisième moyen d'échange de pression PX3 est connectée à l'entrée de la quatrième enceinte 30 de l'unité d'osmose inverse RO. Ainsi, la portion de premier fluide F1p2 arrivant dans l'unité d'osmose inverse RO bénéficiera d'une conservation de l'énergie (réutilisation de la pression) non proposée dans les réalisations illustrées par les [Fig 1] et [Fig 2]. Ce mode de réalisation est donc particulièrement avantageux pour améliorer le dessalement et augmenter le débit de production du troisième fluide.

Le fonctionnement des deuxième et troisième moyens d'échange de pression PX2 et PX3 peuvent être identiques à celui du moyen d'échange de pression PX, et notamment correspondre au fonctionnement et au système de la [Fig 6] déjà décrite.

La [Fig 4] illustre de manière schématique et non limitative, un quatrième mode de réalisation de l'invention. Les mêmes références correspondent aux mêmes éléments que ceux des [Fig 1], [Fig 2] et [Fig 3] et ne seront pas redétaillés.

La [Fig 4] se distingue de la [Fig 1] par l'ajout de deux sources d'énergie supplémentaires Spro et Sro et de deux moyens de transformation d'énergie EEpro et Ero. Une première source d'énergie Spro et d'un moyen de transformation d'énergie EEpro permettent de pressuriser le deuxième fluide F2 en entrée de l'unité d'osmose retardée PRO. Cette pressurisation est classique dans une unité d'osmose retardée PRO et permet de maintenir l'unité d'osmose retardée PRO à une pression de fonctionnement en particulier lors de la mise en pression de l'unité d'osmose retardée PRO par la pression osmotique. Le moyen de transformation de l'énergie EEpro est alimenté en fluide F2 et il est connecté à l'entrée du deuxième fluide F2 de la deuxième enceinte 10 de l'unité d'osmose retardée PRO. Le moyen de transformation de l'énergie EEpro est également connecté à la source d'énergie EEpro. Ainsi, l'énergie arrivant de la source d'énergie Spro est transformée, dans le moyen de transformation d'énergie EEpro, pour pressuriser le deuxième fluide F2, le deuxième fluide F2 ressortant du moyen de transformation d'énergie EEpro à une pression supérieure à la pression à laquelle il y est entré.

La deuxième source d'énergie Sro et le deuxième moyen de transformation de l'énergie EEro permettent de pressuriser le premier fluide pressurisé F1p sortant du moyen d'échange de pression PX.

Le positionnement du moyen de transformation d'énergie EEro est situé entre la sortie de la portion de premier fluide pressurisé F1p du moyen d'échange de pression PX et l'entrée de la portion du premier fluide pressurisé F1p de la quatrième enceinte 30 de l'unité d'osmose inverse RO. En d'autres termes, le moyen de transformation d'énergie EEro est connecté à la fois à la sortie de la portion de premier fluide pressurisé F1p du moyen d'échange de pression PX et à l'entrée de la portion du premier fluide pressurisé F1p de la quatrième enceinte 30 de l'unité d'osmose inverse RO.

Ce moyen de transformation de l'énergie EEro est également connecté à la source d'énergie supplémentaire Sro. Ainsi, l'énergie arrivant de la source d'énergie Sro est transformée, dans le moyen de transformation d'énergie EEro, pour pressuriser la portion de premier fluide pressurisé F1p sortant du moyen d'échange de pression PX, le premier fluide pressurisé F1p ressortant du moyen de transformation d'énergie EEro à une pression supérieure à la pression à laquelle il y est entré.

En étant positionné entre le moyen d'échange de pression PX et l'unité d'osmose inverse RO, la source d'énergie supplémentaire Sro et le moyen de transformation de l'énergie EEro permettent de pouvoir pressuriser encore plus le premier fluide afin de permettre un dessalement optimal. Cette source d'énergie supplémentaire Sro et le moyen de transformation de l'énergie EEro sont notamment particulièrement intéressants lorsque la différence de salinité entre le premier et le deuxième fluide est inférieure à la différence de salinité entre le premier fluide et le troisième fluide. En effet, dans ce cas, la pression générée par l'unité d'osmose retardée peut ne pas être suffisante pour permettre le fonctionnement de l'unité d'osmose inverse. L'ajout de la source d'énergie supplémentaire Sro et le moyen de transformation de l'énergie EEro permet d'atteindre la pression nécessaire au fonctionnement de l'unité d'osmose inverse RO.

Ces sources d'énergie supplémentaires Sro et Spro peuvent être de tout type, notamment éolien, solaire, houlomoteur, hydrolien, électrique. Les moyens de transformation de l'énergie EEpro ou EEro peuvent par exemple comprendre une pompe capable de transformer de l'électricité produite par la source d'énergie, par exemple des panneaux solaires ou une éolienne, en pression du fluide, notamment du premier fluide pressurisé F1p ou du deuxième fluide F2. Cet exemple n'est pas limitatif et d'autres systèmes peuvent être employés à la fois comme source d'énergie et comme moyen de transformation de cette énergie en pression du fluide.

Ces sources d'énergie et ces moyens de transformation de l'énergie pourront être ajoutés aux différents modes de réalisation illustrés par la présente invention pour encore améliorer les performances du système.

## Revendications

1. Procédé de dessalement d'un premier fluide au moyen d'un deuxième fluide, ledit premier fluide ayant une salinité inférieure à la salinité dudit deuxième fluide, lesdits premier et deuxième fluides étant de préférence des eaux, le procédé comprenant une étape d'osmose retardée et une étape d'osmose inverse, le procédé comprenant les étapes suivantes :
* on fait entrer au moins une première portion dudit premier fluide et ledit deuxième fluide dans une unité d'osmose retardée, ledit deuxième fluide entrant dans ladite unité d'osmose retardée à une pression supérieure à la pression à laquelle ledit premier fluide entre dans ladite unité d'osmose retardée ;
* on pressurise au moins une deuxième portion dudit premier fluide au moyen d'un échange avec le deuxième fluide sous pression sortant de ladite unité d'osmose retardée ;
* on fait entrer ladite deuxième portion dudit premier fluide pressurisé dans une unité d'osmose inverse pour récupérer un troisième fluide, la salinité dudit troisième fluide étant inférieure à la salinité dudit premier fluide,
**caractérisé en ce que** ledit deuxième fluide est de l'eau de mer et ledit premier fluide est de l'eau dont la salinité est comprise entre 2 et 18g/L, de préférence entre 2 et 7g/L.

2. Procédé selon la revendication 1 pour lequel ladite unité d'osmose retardée comprend un premier réservoir et un deuxième réservoir, lesdits premier et deuxième réservoirs étant séparés par au moins une première paroi semi-perméable, et pour lequel l'étape d'osmose retardée comprend les étapes suivantes :
- on fait entrer au moins première portion dudit premier fluide dans ledit premier réservoir ;
- on pressurise le deuxième fluide en entrée dudit deuxième réservoir, la pression appliquée étant inférieure à la pression osmotique générée par la différence de salinité entre ledit premier fluide et ledit deuxième fluide, de manière à ce qu'un solvant du premier fluide traverse ladite première paroi semi-perméable et se mélange audit deuxième fluide ;
- on fait entrer ledit deuxième fluide pressurisé dans ledit deuxième réservoir ;
- on fait circuler ladite première portion dudit premier fluide dans ledit premier réservoir depuis une entrée vers une sortie dudit premier fluide et on fait circuler ledit deuxième fluide dans ledit deuxième réservoir depuis une entrée vers une sortie dudit deuxième fluide.

3. Procédé selon l'une des revendications 1 ou 2, pour lequel ladite unité d'osmose inverse comprend un quatrième réservoir et un troisième réservoir, et pour lequel l'étape d'osmose inverse comprend les étapes suivantes :
- on fait entrer ladite deuxième portion dudit premier fluide dans ledit quatrième réservoir, ;
- on applique une pression sur ladite deuxième portion dudit premier fluide afin qu'un solvant dudit premier fluide traverse une deuxième paroi semi-perméable pour entrer dans ledit troisième réservoir, ledit solvant dudit premier fluide formant ainsi un troisième fluide dans ledit troisième réservoir ; et
- on fait ressortir le troisième fluide par une sortie de l'unité d'osmose inverse.

4. Procédé selon l'une des revendications précédentes pour lequel on capte ledit premier fluide au niveau d'une sortie sous-marine d'une source souterraine ou d'un aquifère côtier.

5. Procédé selon l'une des revendications précédentes, pour lequel on prétraite au moins l'un desdits premier et deuxième fluides avant leur utilisation, de préférence, on prétraite lesdits premier et deuxièmes fluides préalablement à l'étape d'osmose retardée.

6. Procédé selon l'une des revendications précédentes, pour lequel on pressurise ledit deuxième fluide arrivant dans l'unité d'osmose retardée par échange de pression avec ledit deuxième fluide pressurisé sortant de l'unité d'osmose retardée.

7. Procédé selon l'une des revendications précédentes, pour lequel on pressurise ledit premier fluide arrivant dans l'unité d'osmose inverse par échange de pression avec ledit premier fluide sortant de l'unité d'osmose inverse pour augmenter la pression dudit premier fluide en entrée de l'unité d'osmose inverse.

8. Procédé selon l'une des revendications précédentes, pour laquelle la salinité dudit troisième fluide en sortie de l'unité d'osmose inverse est inférieure à 6 g/L, de préférence inférieure à 500 mg/L, de manière encore préférée, proche de 200 mg/L.

9. Procédé selon l'une des revendications précédentes, pour lequel on utilise une source d'énergie supplémentaire, de préférence éolien, hydrolien, houlomoteur, solaire pour pressuriser ledit premier fluide en amont de l'unité d'osmose inverse ou ledit deuxième fluide en amont de l'unité d'osmose retardée.

## Patentansprüche

1. Verfahren zur Entsalzung eines ersten Fluids mittels eines zweiten Fluids, wobei das erste Fluid einen Salzgehalt aufweist, der niedriger als der Salzgehalt des zweiten Fluids ist, wobei das erste und des zweite Fluid vorzugsweise jeweils Wasser sind, wobei das Verfahren einen Schritt der verzögerten Osmose und einen Schritt der Umkehrosmose umfasst, wobei das Verfahren die folgenden Schritte umfasst:
* Wenigstens ein erster Teil des ersten Fluids und das zweite Fluid werden in eine Einheit zur verzögerten Osmose eingeleitet, wobei das zweite Fluid in die Einheit zur verzögerten Osmose bei einem Druck eintritt, der höher als der Druck ist, bei dem das erste Fluid in die Einheit zur verzögerten Osmose eintritt;
* wenigstens ein zweiter Teil des ersten Fluids wird mittels eines Austauschs mit dem zweiten Fluid unter Druck, das aus der Einheit zur verzögerten Osmose austritt, mit Druck beaufschlagt;
* der zweite Teil des druckbeaufschlagten ersten Fluids wird in eine Umkehrosmoseeinheit eingeleitet, um ein drittes Fluid zu gewinnen, wobei der Salzgehalt des dritten Fluids niedriger als der Salzgehalt des ersten Fluids ist,
**dadurch gekennzeichnet, dass** das zweite Fluid Meerwasser ist und das erste Fluid Wasser ist, dessen Salzgehalt zwischen 2 und 18 g/l, vorzugsweise zwischen 2 und 7 g/l liegt.

2. Verfahren nach Anspruch 1, wobei die Einheit zur verzögerten Osmose einen ersten Tank und einen zweiten Tank umfasst, wobei der erste und der zweite Tank durch mindestens eine erste halbdurchlässige Wand getrennt sind und wobei der Schritt der verzögerten Osmose die folgenden Schritte umfasst:
- Wenigstens ein erster Teil des ersten Fluids wird in den ersten Tank eingeleitet;
- das zweite Fluid wird am Einlass des zweiten Tanks mit Druck beaufschlagt, wobei der ausgeübte Druck niedriger als der osmotische Druck ist, der durch den Unterschied im Salzgehalt zwischen dem ersten Fluid und dem zweiten Fluid erzeugt wird, derart, dass ein Lösungsmittel des ersten Fluids die erste halbdurchlässige Wand durchquert und sich mit dem zweiten Fluid vermischt;
- das druckbeaufschlagte zweite Fluid wird in den zweiten Tank eingeleitet;
- der erste Teil des ersten Fluids wird im ersten Tank von einem Einlass zu einem Auslass des ersten Fluids strömen gelassen, und das zweite Fluid wird im zweiten Tank von einem Einlass zu einem Auslass des zweiten Fluids strömen gelassen.

3. Verfahren nach einem der Ansprüche 1 oder 2, wobei die Umkehrosmoseeinheit einen vierten Tank und einen dritten Tank umfasst und wobei der Schritt der Umkehrosmose die folgenden Schritte umfasst:
- Der zweite Teil des ersten Fluids wird in den vierten Tank eingeleitet;
- es wird ein Druck auf den zweiten Teil des ersten Fluids ausgeübt, damit ein Lösungsmittel des ersten Fluids eine zweite halbdurchlässige Wand durchquert, um in den dritten Tank einzutreten, wobei das Lösungsmittel des ersten Fluids somit ein drittes Fluid in dem dritten Tank bildet; und
- das dritte Fluid wird über einen Auslass der Umkehrosmoseeinheit ausgeleitet.

4. Verfahren nach einem der vorhergehenden Ansprüche, wobei das erste Fluid an einem unterseeischen Auslass einer unterirdischen Quelle oder eines Küstenaquifers aufgefangen wird.

5. Verfahren nach einem der vorhergehenden Ansprüche, wobei das erste und/oder das zweite Fluid vor ihrer Verwendung vorbehandelt werden und vorzugsweise das erste und das zweite Fluid vor dem Schritt der verzögerten Osmose vorbehandelt werden.

6. Verfahren nach einem der vorhergehenden Ansprüche, wobei das zweite Fluid, das in der Einheit zur verzögerten Osmose ankommt, durch Druckaustausch mit dem druckbeaufschlagten zweiten Fluid druckbeaufschlagt wird, das aus der Einheit zur verzögerten Osmose austritt.

7. Verfahren nach einem der vorhergehenden Ansprüche, wobei das erste Fluid, das in der Umkehrosmoseeinheit ankommt, durch Druckaustausch mit dem ersten Fluid druckbeaufschlagt wird, das aus der Umkehrosmoseeinheit austritt, um den Druck des ersten Fluids am Einlass der Umkehrosmoseeinheit zu erhöhen.

8. Verfahren nach einem der vorhergehenden Ansprüche, wobei der Salzgehalt des dritten Fluids am Auslass der Umkehrosmoseeinheit weniger als 6 g/l, vorzugsweise weniger als 500 mg/l und noch stärker bevorzugt annähernd 200 mg/l beträgt.

9. Verfahren nach einem der vorhergehenden Ansprüche, wobei eine zusätzliche Energiequelle, vorzugsweise von Wind-, Unterwasserströmungs-, Meereswellen- oder Solarenergie, verwendet wird, um das erste Fluid stromaufwärts der Umkehrosmoseeinheit oder das zweite Fluid stromaufwärts der Einheit zur verzögerten Osmose mit Druck zu beaufschlagen.

## Claims

1. Method for desalinating a first fluid by means of a second fluid, said first fluid having a salinity lower than the salinity of said second fluid, said first and second fluids preferably being waters, the method comprising a pressure-retarded osmosis step and a reverse osmosis step, the method comprising the following steps:
* at least a first portion of said first fluid and said second fluid is fed into a pressure-retarded osmosis unit, said second fluid entering said pressure-retarded osmosis unit at a pressure higher than the pressure at which said first fluid enters said pressure-retarded osmosis unit;
* at least a second portion of said first fluid is pressurized by means of an exchange with the second pressurized fluid exiting said pressure-retarded osmosis unit;
* said second portion of said first pressurized fluid is fed into a reverse osmosis unit to recover a third fluid, the salinity of said third fluid being less than the salinity of said first fluid,
**characterized in that** said second fluid is seawater and said first fluid is water, the salinity of which is between 2 and 18 g/L, preferably between 2 and 7 g/L.

2. Method according to Claim 1, wherein said pressure-retarded osmosis unit comprises a first reservoir and a second reservoir, said first and second reservoirs being separated by at least one first semi-permeable wall, and wherein the pressure-retarded osmosis step comprises the following steps:
- at least a first portion of said first fluid is fed into said first reservoir;
- the second fluid is pressurized at the inlet of said second reservoir, the applied pressure being lower than the osmotic pressure generated by the difference in salinity between said first fluid and said second fluid, such that a solvent of the first fluid passes through said first semi-permeable wall and mixes with said second fluid;
- said second pressurized fluid is fed into said second reservoir;
- said first portion of said first fluid is circulated in said first reservoir from an inlet to an outlet for said first fluid, and said second fluid is circulated in said second reservoir from an inlet to an outlet for said second fluid.

3. Method according to either of Claims 1 and 2, wherein said reverse osmosis unit comprises a fourth reservoir and a third reservoir, and wherein the reverse osmosis step comprises the following steps:
- said second portion of said first fluid is fed into said fourth reservoir;
- a pressure is applied to said second portion of said first fluid so that a solvent of said first fluid passes through a second semi-permeable wall to enter said third reservoir, said solvent of said first fluid thus forming a third fluid in said third reservoir; and
- the third fluid is discharged through an outlet of the reverse osmosis unit.

4. Method according to one of the preceding claims, wherein said first fluid is captured at an underwater outlet of an underground spring or of a coastal aquifer.

5. Method according to one of the preceding claims, wherein at least one of said first and second fluids is pretreated prior to use, preferably said first and second fluids are pretreated prior to the pressure-retarded osmosis step.

6. Method according to one of the preceding claims, wherein said second fluid entering the pressure-retarded osmosis unit is pressurized by pressure exchange with said second pressurized fluid exiting the pressure-retarded osmosis unit.

7. Method according to one of the preceding claims, wherein said first fluid entering the reverse osmosis unit is pressurized by pressure exchange with said first fluid exiting the reverse osmosis unit to increase the pressure of said first fluid entering the reverse osmosis unit.

8. Method according to one of the preceding claims, wherein the salinity of said third fluid at the outlet of the reverse osmosis unit is less than 6 g/L, preferably less than 500 mg/L, more preferably close to 200 mg/L.

9. Method according to one of the preceding claims, wherein an additional energy source, preferably wind, tidal-current, wave, or solar energy, is used to pressurize said first fluid upstream of the reverse osmosis unit or said second fluid upstream of the pressure-retarded osmosis unit.
